# EUROPEAN PATENT APPLICATION

(11) **EP 1 422 172 A1**
(43) Date of publication of application: **26.05.2004**
(21) Application number: 03025653.1
(22) Date of filing: 07.11.2003
(51) Int. Cl.: B65G 47/51, B65G 1/04

(54) **Device for temporarily storing manufactured articles, particularly mattresses**

(30) Priority: 19.11.2002 IT BO20020728
(71) Applicant: RESTA S.R.L., I-48018 Faenza (Ravenna) (IT)
(72) Inventor: Resta, Roberto, 48018 Faenza (Prov. of Ravenna) (IT)
(74) Representative: Modiano, Guido, Dr.-Ing.

(57) **Abstract**

A device for temporarily storing manufactured articles, particularly mattresses, comprising a framework (4) with a mattress insertion (8) and a removal side (9) adapted to guide vertically a plurality of superimposed horizontal frames (5a, 5b, 5c, 5d, 5e, 5f) for temporarily accommodating mattresses (6) to be stored, the framework (4) including: elements (10) for actuating the frames (5a-5f) between a lowered stacked position and a raised, spaced, position, a mattress receiving surface (7), above the upper stack frame (5a), a mattress transferring-removal device synchronized with the actuation elements (10) so that for storage each frame (5a-5f) is raised until the mattress (6) accommodated thereon is at a height, from the receiving surface (7), greater than the mattress height, and selective expulsion elements for removing the mattress (6) accommodated on the frames (5a-5f).

## Description

The present invention relates to a device for temporarily storing manufactured articles, particularly mattresses.

In the field of the manufacture of mattresses and the like, devices for temporarily storing the manufactured articles between the various steps of manufacture, in order to reduce their overall dimensions and facilitate their management, are currently known.

In these devices, the mattresses are inserted in succession and stacked together vertically; removal is generally designed so that the last mattress inserted in the stack is also the first one that can be removed. This operating method, however, is often found to be rather disadvantageous and not convenient, since it does not allow to access intermediate regions of the stack in order to remove manufactured articles inserted earlier: in known devices, as mentioned, in order to remove a given mattress it is in fact necessary to also remove the ones inserted subsequently.

The aim of the present invention is to obviate the cited drawbacks, by providing a device for temporarily storing stacked manufactured articles that allows to remove equally, and at the user's discretion, products located at the ends of the stack or located in intermediate positions.

Within this aim, an object of the present invention is to provide a device that is capable of storing and removing manufactured articles from any position of the stack rapidly and effectively.

Another object of the present invention is to provide a device that is simple, relatively easy to provide in practice, safe in use, effective in operation, and has a relatively low cost.

This aim and these and other objects that will become better apparent hereinafter are achieved by the present device for temporarily storing manufactured articles, particularly mattresses, characterized in that it comprises a framework that forms a mattress insertion side and a mattress removal side and is adapted to guide vertically a plurality of superimposed horizontal frames for temporarily accommodating mattresses to be stored, said framework being provided with: elements for actuating said frames between a lowered position, in which they are substantially stacked together so as to form a vertical stack, and a raised position, in which they are mutually spaced by a distance that is greater than the height of the individual mattresses; a surface for receiving the mattresses, which lies above the upper frame of the stack; means for transferring and removing the mattresses on said receiving surface, which are synchronized with said actuation elements so that during storage of the mattresses each one of said frames is raised until the mattress accommodated thereon is at a height, with respect to said receiving surface, that is greater than the height of a mattress, while during the step for removing the mattresses the lowest of the raised frames loaded with the mattresses is lowered below said receiving surface, so as to deposit the mattress onto said surface; and selective expulsion elements, which are adapted to remove, at the user's discretion, the mattress accommodated on any one of said frames.

Further characteristics and advantages of the invention will become better apparent from the following detailed description of a preferred but not exclusive embodiment of a device for temporarily storing manufactured articles, particularly mattresses, according to the invention, illustrated by way of nonlimiting example in the accompanying drawings, wherein:
Figure 1 is a perspective view of the storage device according to the invention, with mattresses accommodated on the respective frames;
Figure 2 is a simplified perspective view of said storage device, in which the frames and the selective expulsion elements have been removed for the sake of better comprehension;
Figure 3 is a simplified perspective view of the device, in which the selective expulsion elements are not shown and the frames stacked in the lowered position are instead highlighted;

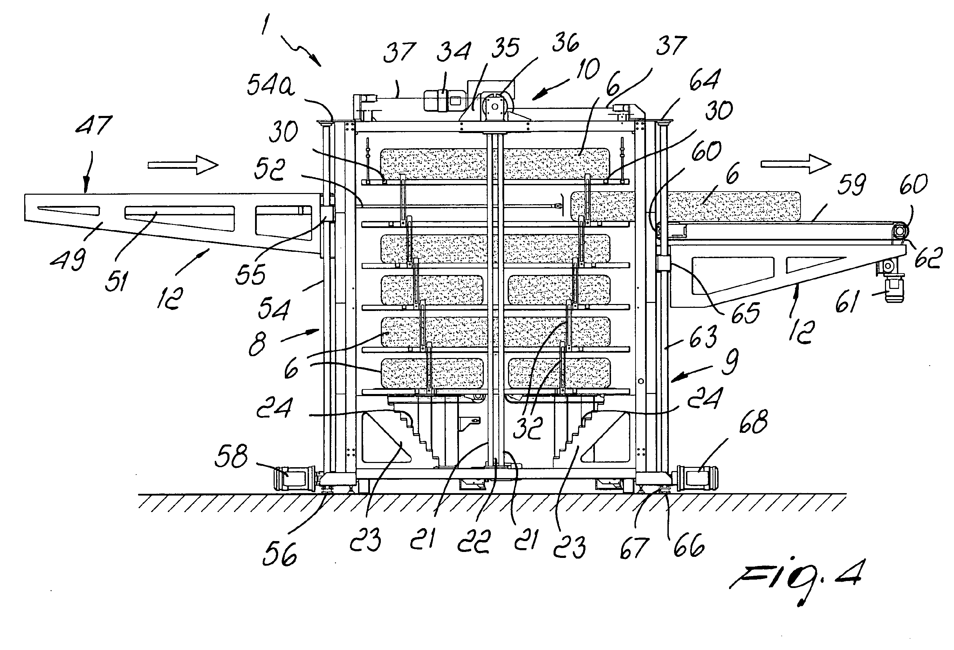

Figure 4 is a side elevation view of the storage device, in which the selective expulsion elements are shown during removal of a mattress from the respective frame;
Figure 5 is a side elevation view of an alternative embodiment of said device, with the selective expulsion elements shown during removal of a mattress from the respective frame.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be deleted from the claims.

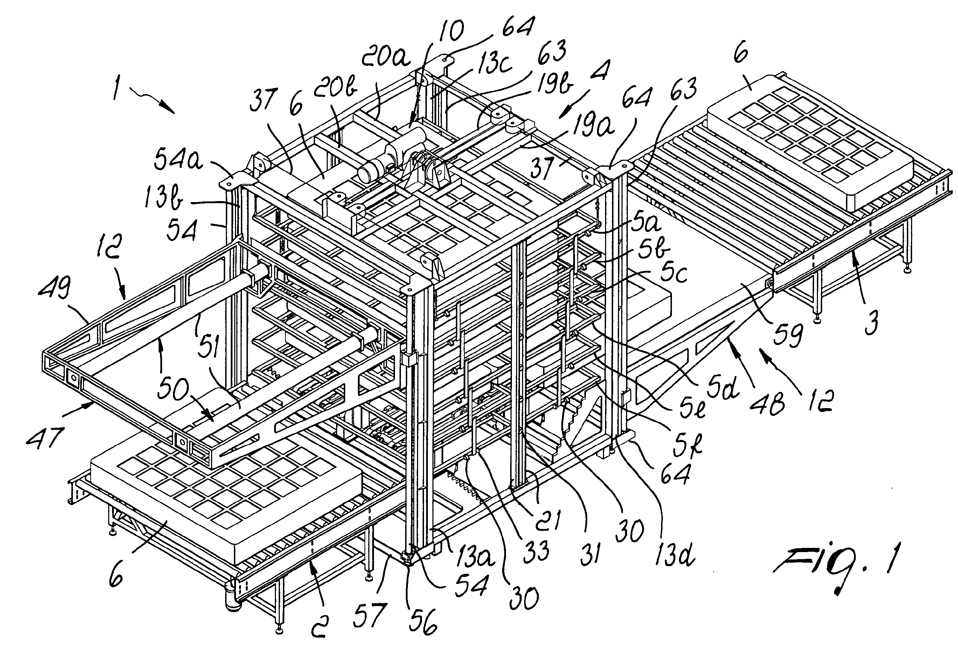

With reference to Figure 1, the reference numeral 1 generally designates a device for temporarily storing manufactured articles, particularly mattresses, according to the invention. Figure 1 also shows a mattress conveyance line, for example of the type with parallel rollers, which comprises an input portion 2 and an output portion 3.

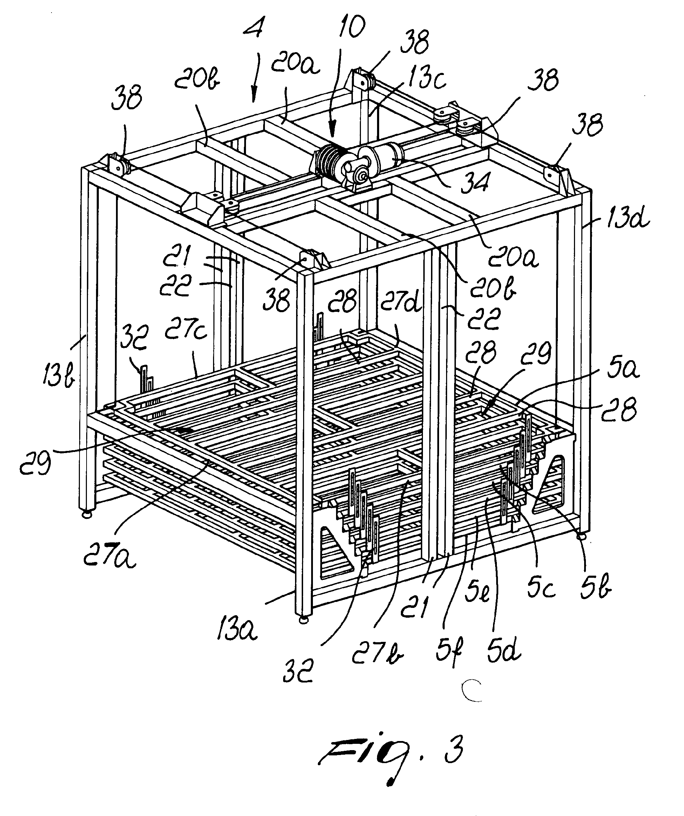

The device comprises a framework 4, which is adapted to guide vertically a plurality of frames 5a, 5b, 5c, 5d, 5e and 5f for supporting and accommodating temporarily respective mattresses 6 (for example double or single ones), which can be inserted in the device on a receiving surface 7 from which the mattresses can also be removed; for this purpose, the framework has a side 8 for inserting the mattresses and a side 9 for removing them (reference should be made in particular to Figure 3).

The device is provided with elements 10 for actuating the frames 5a-5f (which include an upper frame 5a and a lower frame 5f), which are adapted to move said frames between a lowered position, in which they are substantially stacked together so as to form a sort of vertical stack, to a raised position, in which they are mutually spaced by an extent that is greater than the height of the individual mattresses 6.

There are also means 11 for transferring and removing the mattresses 6 from the receiving surface 7; said means are synchronized with the elements 10 for actuating the frames 5a-5f, and there are also selective expulsion elements 12 that are adapted to remove the mattresses accommodated in the frames that are arranged at an intermediate level with respect to the upper frame 5a and the lower frame 5f.

The framework 4 comprises four vertical posts 13a, 13b, 13c, 13d, which are connected at their base by lower longitudinal members 14a and 14b and by lower cross-members 15a and 15b and at the top by upper longitudinal members 16a and 16b and upper cross-members 17a and 17b, so as to form a structure that is shaped substantially like a parallelepiped; the lower cross-members 15a and 15b are fixed, at their opposite ends, respectively to the posts 13a, 13b and 13c, 13d at a higher level than the level at which the lower longitudinal members 14a and 14b are fixed.

The framework 4 rests on the ground by way of feet 18, which are fixed to the lower portion of the respective posts 13a, 13d, and has at the top two parallel longitudinal beams 19a and 19b and two transverse beams 20a and 20b, which are also parallel and are fixed, at their ends, respectively at the central portions of the upper cross-members 17a and 17b and at the central portions of the upper longitudinal members 16a and 16b, crossing substantially at their respective centerlines so as to form a sort of cross.

The centerline of each upper longitudinal member 16a, 16b is connected to the centerline of the corresponding lower longitudinal member 14a, 14b by way of a respective pair of vertical parallel slats 21, which form between them an elongated slot 22 from the top of the frame 4 to its base. Respective angular elements are fixed at the ends for interconnecting the lower longitudinal members 14a and 14b and the posts 13a-13d; said angular elements 23 are substantially triangular and form a plurality of steps 24 distributed on each respective hypotenuse.

At the base of the frame 4 there are parallel cross-members 25, which are connected at their ends to the lower longitudinal members 14a and 14b; the cross-members 25 support respective vertical columns 26, which are arranged substantially at the center of said base of the frame 4.

Each one of the frames 5a-5f is substantially rectangular, since each one is constituted by four perimetric bars 27a, 27b, 27c, 27d that are interconnected at their respective ends. The perimetric bars 27a, 27d are connected to each other by pairs of parallel longitudinal members 28 that form respectively pairs of longitudinally elongated openings 29. Each one of the frames 5a-5f has, along both lateral perimetric bars 27b and 27c, respective pairs of teeth 30 that protrude outward.

The teeth 30 of each pair are arranged at a mutual distance that decreases gradually from the upper frame 5a to the lower frame 5f, so that they can rest, when said frames are in the lowered position (i.e., in the mattress loading configuration), on corresponding pairs of steps 24.

Further, a respective pin 31 protrudes outward from the centerline of each one of the lateral perimetric bars 27b, 27c of the frames and is adapted to engage along the slot 22 formed by each pair of strips 21: this provides a vertical sliding coupling for each one of the frames 5a-5f inside the framework 4. Respective pairs of rods 32 are fixed, by means of their lower ends, along the lateral perimetric bars 27b, 27c of each frame (except for the upper frame 5a); each rod is affected by a vertical slot along the face that is directed toward the inside of the framework 4.

On each perimetric lateral bar 27b, 27c of each frame 5a-5f, each pair of rods 32 is associated with a respective pair of pins 33, which protrude outward. The mutual distance of the rods 32 of each pair (and accordingly of the pivots 33) decreases gradually from the upper surface 5a to the lower surface 5f: in this manner, each pair of pins 33 of each frame engages along the slots of the corresponding pair of rods 32 of the underlying frame, so as to mutually interconnect all the frames 5a-5f both in the lowered position and in the fully raised position, as well as in all the other possible intermediate configurations.

The elements 10 for actuating the frames 5a-5f from the lowered position to the raised position comprise a gearmotor unit 34, which is supported on a corresponding bracket 35, which is fixed to the longitudinal beams 19a, 19b and transverse beams 20a, 20b, on the output shaft of which a drum 36 for winding inextensible cables 37 is keyed; said cables, by way of a plurality of guiding pulleys 38 that are supported rotatably at the top of the framework, are fixed by way of their respective ends to the connecting points of the perimetric bars 27a-27d of the upper frame 5a. The actuation of the gearmotor unit 34 in one direction or the other allows to move up or down the frames 5a-5f that are mutually connected, so as to space them in order to facilitate the insertion of the mattresses 6 or stack them at the base of the framework 4.

The elements 11 for transferring and removing the mattresses 6 from the receiving surface 7 comprise four pairs of belts 39, which are closed in a loop and are wound around respective pulleys 40, so that their respective active upper portions enter the openings 29 formed by the longitudinal members 28 of the frames 5a-5f. The receiving surface 7, formed substantially by said upper portions of the belts 39, is arranged at a higher level than the frame to be loaded with a respective mattress 6, so that the rotation of the belts 39 drags said mattress during storage or removal by acting on its lower face.

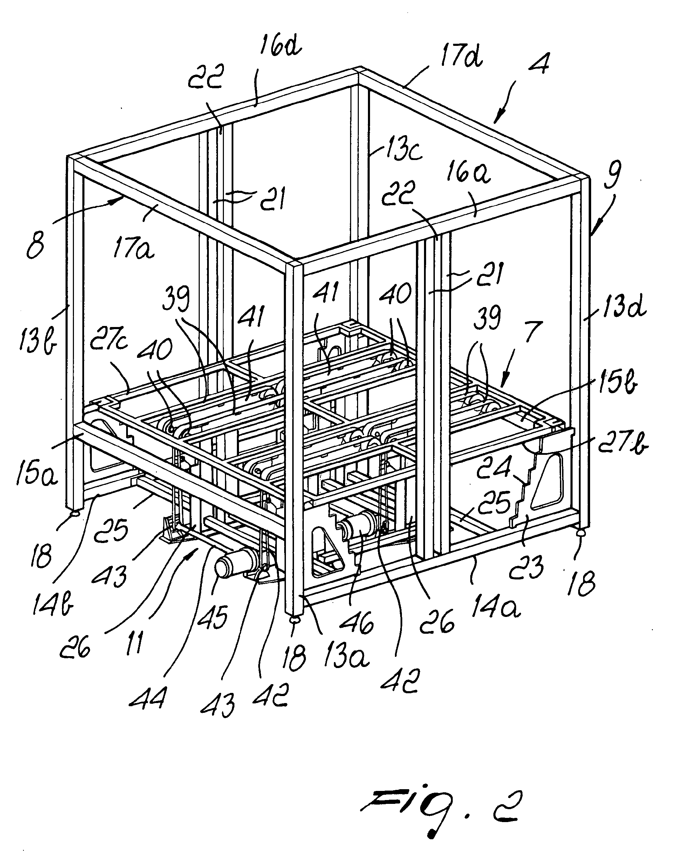

The pulleys 40 are supported so that they can rotate on supporting elements 41, which are rigidly coupled to the top of the pillars 26 and are turned for example by chains 42 that mesh on pinions 43 that are keyed on the output shafts 44 of a first motor 45 and of a second motor 46, which are fixed to the base of the pillars 26; as shown in Figure 2, each one of said first and second motors 45 and 46 drives two respective pairs of belts 39.

The selective expulsion elements 12 comprise a pusher 47 for removing the mattresses 6, which is associated with the framework 4 at the insertion side 8 of said mattresses, and a platform 48 for supporting the mattresses expelled by the pusher 47 that is associated with the removal side 9.

The pusher 47 and the supporting platform 48 can be actuated, selectively and independently of each other, for example with the aid of a reading system, so as to perform a vertical translational motion between two end positions, which substantially correspond to the top and base of the framework 4 and can be both arranged in any intermediate position.

The pusher 47 comprises a bracket 49, which is shaped substantially like a border and is provided with various lightening openings, along the sides of which two linear actuators 50 that are parallel to the inlet-exit axis of the device are rigidly coupled. Each one of the actuators 50, for example of the pneumatic type controlled by corresponding valve means for selective actuation (not shown in the figures; however, hydraulic or electromechanical actuators can be used), is constituted by a cylinder 51, which is fixed at its ends to the bracket and in which a stem 52 can slide; said stem can be actuated from a retracted position to one or more positions that are extended toward the inside of the framework 4 in order to expel the mattresses 6. The stem of each actuator has a respective plate 53 articulated thereto at its free end, said plate being adapted to act on the lateral surface of the mattress to be removed.

The bracket 49 is actuated so as to slide vertically along the insertion side 8 of the mattresses by way of the presence of a first pair of actuation screws 54, which are supported so that they can rotate, at their ends, in front plates 55 that are rigidly coupled to the top and base of the framework at the posts 13a-13d. The actuation screws 54 engage in respective front female threads 55, which are rigidly coupled to the sides of the bracket 49; the lower ends of the actuation screws 54 have respective toothed front sprockets 56 rigidly and coaxially coupled thereto, and each sprocket meshes with a respective front chain 57; the chains 57 are actuated by a respective front motor 58, which is rigidly coupled to the base of the insertion side 8 of the mattresses 6. As an alternative, instead of chain drive means it is possible to use belts that are closed in a loop and wound around respective pulleys.

The platform 48 for supporting the mattresses being expelled, which is substantially rectangular and border-like, has means for the rotary actuation of a belt 59, which is closed in a loop and forms an upper active portion for conveying the removed mattress 6 toward the output portion 3 of the conveyance line.

The means for the rotary actuation of the belt comprise two parallel rollers 60, which are supported rotatably at the opposite ends of the supporting platform 48 and are actuated by a respective electric motor 61 by way of a belt 62 or entirely similar means.

A second pair of actuation screws 63, supported so that they can rotate at their opposite ends on respective rear plates 64 that are rigidly coupled to the top and base of the framework 4 at the posts 13a-13d of the side 8 for removing the mattresses 6, are engaged in respective rear female threads 65 that protrude from the sides of the platform 48. Each one of the actuation screws 63 has a rear toothed sprocket 66, which is rigidly coupled thereto at its lower end and meshes with a respective rear chain 67, which is actuated by a rear motor 68 that is rigidly coupled to the base of the framework at the removal side 9 of the mattresses.

The operation of the device according to the invention is as follows. Assuming that the device is initially in the configuration for loading the mattresses, i.e., with all the frames 5a-5f in the lowered position, the mattresses 4 to be stored are conveyed, on the input portion 2, at the insertion side 8; the first of said mattresses is positioned on the receiving surface 7 by way of the traction performed by the belts 39. By actuating the actuation means 10 of the frames 5a-5f, the upper frame 5a is raised until it makes contact with the lower face of the mattress 6; a further upward motion allows to raise the upper frame 5a, together with the loaded mattress, to a level that is sufficient to arrange, on the receiving surface 7, a subsequent mattress to be stored. The mutual connection between the frames provided by way of the rods 32 allows, step by step, to load all the frames 5a-5f of the device with respective mattresses.

The mattresses can be removed from the device, at the user's discretion, both in reverse with respect to the order in which they were inserted (simply by performing the described steps in reverse order) and selectively by removing the chosen mattress. To perform removal according to this last advantageous method, one acts on the front motor 58 and therefore on the first pair of actuation screws 54, allowing to arrange the pusher 47 at the height that corresponds to the mattress to be removed; at the same time, by way of the actuation of the rear motor 68 and therefore of the second pair of actuation screws 63, the supporting platform 48 is arranged at the same height as the pusher 47.

At this point, the stems 52 of the linear actuators 50 are actuated so as to protrude, pushing the mattress in a longitudinal direction toward the outside of the framework 4; this thrust allows to convey the mattress onto the active upper portion of the belt 59 of the platform, which cooperates in removing the mattress 6 from the respective frame 5a-5f.

In order to place the mattress on the output portion 3 of the conveyance line, it is necessary to actuate again the rear motor 68, arranging the supporting platform 48 at the same height as said output portion, and then act on the belt 59, which transfers the mattress onto the conveyance line. The mattress removal step described above can be performed advantageously for all the mattresses accommodated on the frames 5a-5f arranged in intermediate positions with respect to the upper frame 5a and the lower frame 5f.

It is noted that it is possible to store and remove from the device both single and double mattresses and mattresses that have different dimensions: the stems 52 of the linear actuators 50 in fact can be extracted from the respective cylinders 51 in two or more intermediate positions, thus allowing for example to remove only one, or both, of the single mattresses accommodated on a same frame.

It has thus been shown that the invention achieves the proposed aim and objects.

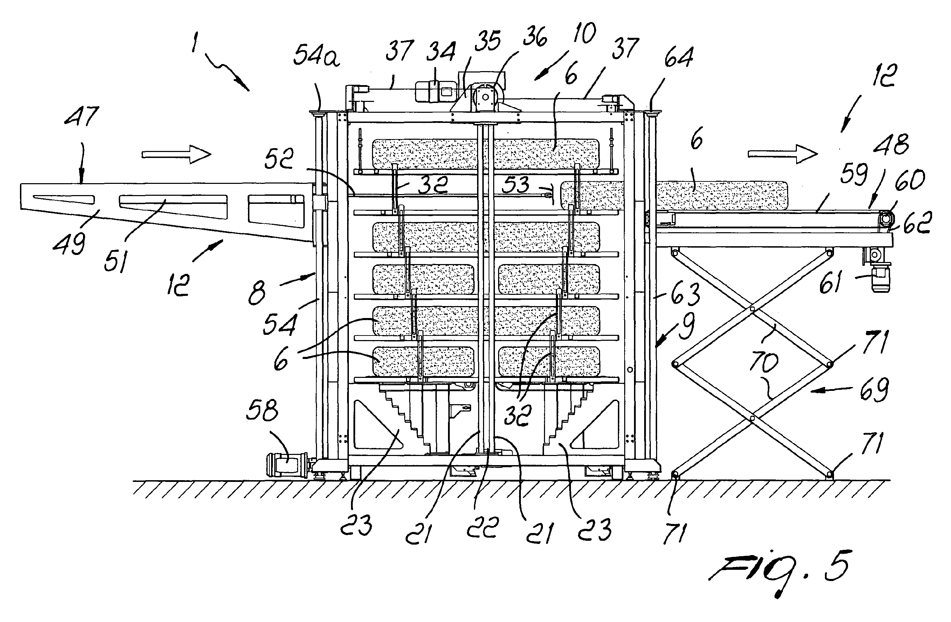

Figure 5 illustrates an alternative embodiment of the device according to the invention, which has a supporting platform 48 that is associated with one or more supporting structures 69 and is adapted to support the weight of the mattresses 6 during removal from the respective frames 5a-5f. The structure 69 is preferably of the pantograph type, anchored to the ground and constituted by a plurality of rockers 70 that are mutually interconnected, at their respective ends and centerlines, by way of hinges 71. The structure 69 is provided with corresponding actuation elements for selective positioning at the frame, among the frames 5a-5f, on which the mattress to be removed is accommodated. The actuation elements can be actuated so as to allow the translational motion of the platform 48 together with the pusher 47 in the step of the removal cycle in which said elements are arranged at the mattress to be expelled, and independently of the pusher 47 in the step in which the platform 48 is lowered substantially to the level of the output portion 3 of the mattress conveyance line.

This alternative embodiment is particularly adapted when treating relatively heavy manufactured articles so as to limit the static stresses on the mechanical elements due to the cantilevered arrangement of the platform 48 with respect to the framework 4.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. BO2002A000728 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for temporarily storing manufactured articles, particularly mattresses, **characterized in that** it comprises a framework (4) that forms an insertion side (8) and a removal side (9) for the mattresses (6) and is adapted to guide vertically a plurality of superimposed horizontal frames (5a, 5b, 5c, 5d, 5e, 5f) for temporarily accommodating mattresses (6) to be stored, said framework (4) being provided with: elements (10) for actuating said frames (5a-5f) between a lowered position, in which they are substantially stacked together so as to form a vertical stack, and a raised position, in which they are mutually spaced by a distance that is greater than the height of the individual mattresses (6); a surface (7) for receiving the mattresses (6), which lies above the upper frame (5a) of said stack; means (11) for transferring and removing the mattresses (6) on said receiving surface (7), which are synchronized with said actuation elements (10) so that during storage of the mattresses (6) each one of said frames (5a-5f) is raised until the mattress (6) accommodated thereon is at a height, with respect to said receiving surface (7), that is greater than the height of a mattress (6), while during the step for removing the mattresses (6) the lowest of the raised frames (5a-5f) loaded with the mattresses (6) is lowered below said receiving surface (7), so as to deposit the mattress (6) onto said surface (7); and selective expulsion elements (12), which are suitable to remove, at the user's discretion, the mattress (6) accommodated on any one of said frames (5a-5f).

2. The device according to claim 1, **characterized in that** said selective expulsion elements (12) comprise, at said insertion side (8), a pusher (47) for removing the mattresses (6) from the respective frames (5a-5f) and, at said removal side (9), a platform (48) for supporting the mattresses expelled by said pusher (47), said pusher (47) and said platform (48) being actuatable so as to perform a selective vertical translational motion between two end positions, which correspond respectively to the top and base of said framework (4), and being arrangeable in a plurality of intermediate positions, said pusher (47) and said platform (48) being mutually synchronized during removal of the mattresses (6) in order to allow the expulsion of a mattress (6) and its deposition on said platform (48), said platform (48) being actuatable autonomously, during the subsequent transfer of the removed mattress (6), so that it is arranged in a position for the exit of the expelled mattress (6).

3. The device according to claims 1 and 2, **characterized in that** said pusher (47) comprises at least one linear actuator (50) that has a horizontal axis that is parallel to the entry-exit direction of the mattresses (6) and is rigidly coupled to a front bracket (49) that is actuated to as to perform a vertical translational motion along said insertion side (8) of the mattresses (6), said actuator (50) being provided with a stem (52) that can be actuated selectively from a retracted position to at least one extended position extended toward the inside of said framework (4) for the expulsion of the mattress (6).

4. The device according to one or more of the preceding claims, **characterized in that** said platform (48) is adapted to support and actuate rotatably a belt (59) that is closed in a loop and forms an active upper branch for transferring in output the mattress (6) expelled by said pusher (47).

5. The device according to one or more of the preceding claims, **characterized in that** said pusher (47) comprises two of said linear actuators (50), located at the opposite ends of said front bracket (49).

6. The device according to one or more of the preceding claims, **characterized in that** said means (11) for transferring and removing the mattresses (6) are constituted by horizontal and parallel belts (39) in which the upper portions are arranged on a plane that lies above said upper frame (5a) of said stack and forms said receiving surface (7), and **in that** said frames (5a-5f) have openings (29) that are adapted to allow the passage of said belts (39) during the rise and descent of said frames (5a-5f) above and respectively below said receiving surface (7).

7. The device according to one or more of the preceding claims, **characterized in that** said frames (5a-5f) are mutually connected by rods (32), which are adapted to allow the spacing of said frames (5a-5f) during lifting above said receiving surface (7) and the formation of a stack below said surface (7).

8. The device according to one or more of the preceding claims, **characterized in that** said elements (10) for actuating said frames (5a-5f) comprise a gearmotor unit (34), which is provided with a drum (36) for winding and unwinding cables (37) that are coupled to said upper frame (5a) by way of a plurality of guiding pulleys (38).

9. The device according to one or more of the preceding claims, **characterized in that** a first pair (54) and a second pair (63) of vertical actuation screws are provided respectively at said insertion side (8) and at said removal side (9) of the mattresses (6), respective front female threads (55) and rear female threads (65) being engaged along said screws, said screws being provided on said bracket (49) and on said platform (48), said first and second pairs of actuation screws (54, 63) being associated with a respective front motor (58) and rear motor (68) for actuation, said motors being independent, so as to allow the selective vertical translational motion of said pusher (47) and of said supporting platform (48).

10. The device according to one or more of the preceding claims, **characterized in that** said platform (48) is associated with at least one supporting structure (69) that is adapted to bear the weight of the mattress (6) being removed.

11. The device according to one or more of the preceding claims, **characterized in that** said supporting structure (69) is substantially of the pantograph type, is anchored to the ground and is constituted by a plurality of rockers (70), which are mutually connected by hinges (71) at their respective ends and centerlines.

12. The device according to one or more of the preceding claims, **characterized in that** said supporting structure (69) is provided with elements for the selective actuation of said platform (48), which can be actuated so as to make said platform (48) perform a translational motion together with said pusher (47) during positioning at the level of the frame of said frames (5a-5f) that accommodates the mattress (6) to be removed, and independently of said pusher (47) during the positioning of said platform (48) at the exit height of the mattress (6).
